# FASCICULE DE BREVET EUROPEEN

(11) **EP 2 367 705 B1**
(45) Date de publication et mention de la délivrance du brevet: **05.09.2018**
(21) Numéro de dépôt: 09756723.4
(22) Date de dépôt: 17.11.2009
(51) Int. Cl.: B60L 11/18, H02J 7/02

(54) **PROCEDE ET DISPOSITIF ELECTRIQUE COMBINE D'ALIMENTATION ET DE CHARGE A MOYENS DE COMPENSATION**
VERFAHREN UND ELEKTRISCHES KOMBINATIONSGERÄT FÜR ANTRIEB UND AUFLADUNG MIT KOMPENSATIONSMITTEL
METHOD AND ELECTRIC COMBINED DEVICE FOR POWERING AND CHARGING WITH COMPENSATION MEANS

(30) Priorité: 18.11.2008 FR 0806456
(43) Date de publication de la demande: 28.09.2011
(73) Titulaire: Valeo Systèmes de Contrôle Moteur, 95892 Cergy Pontoise (FR)
(72) Inventeur: DE SOUSA, Luis, 95670 Eragny sur Oise (FR); BOUCHEZ, Boris, 95800 Cergy (FR)
(74) Mandataire: Argyma
(86) Numéro de dépôt international: PCT/EP2009/065335
(87) Numéro de publication internationale: WO 2010/057893

(56) Documents cités:
- EP-A- 0 603 778
- US-A- 5 457 372
- US-A1- 2004 178 754
- SUL S-K ET AL: "AN INTEGRAL BATTERY CHARGER FOR FOUR-WHEEL DRIVE ELECTRIC VEHICLE" IEEE TRANSACTIONS ON INDUSTRY APPLICATIONS, IEEE SERVICE CENTER, PISCATAWAY, NJ, US, vol. 31, no. 5, 1 septembre 1995 (1995-09-01), pages 1096-1099, XP000535588 ISSN: 0093-9994

## Description

La présente invention concerne un dispositif électrique combiné d'alimentation et de charge ainsi qu'un procédé associé et se situe dans le domaine des moteurs ou alternateurs alimentés par des batteries rechargeables.

L'invention trouvera avantageusement application dans le domaine des automobiles électriques dans lesquelles les batteries peuvent alimenter le moteur via un onduleur et être rechargées lorsque l'automobile est à l'arrêt.

Toutefois bien que particulièrement prévus pour une telle application le dispositif et le procédé associé pourront être utilisés dans d'autres domaines et notamment dans des dispositifs de génération d'énergie de type éolien ou hydraulique.

### ARRIERE PLAN DE L'INVENTION

Classiquement un véhicule électrique est équipé de batteries haute tension délivrant un courant continu à un onduleur qui transforme ce courant continu en un courant alternatif permettant d'alimenter un moteur électrique, ce dernier assurant la mise en mouvement du véhicule.

De manière à assurer la recharge de ces batteries haute tension il est connu d'équiper le véhicule d'un dispositif de charge embarqué comportant essentiellement un convertisseur alternatif continu permettant de redresser la puissance alternative du réseau électrique pour charger les batteries. Le dispositif comprend en outre avantageusement un convertisseur continu-continu assurant l'adaptation du niveau de tension du réseau à celui des batteries.

Les composants électroniques de la chaîne d'alimentation d'une part et de la chaîne de charge d'autre part sont coûteux. Par ailleurs l'alimentation du moteur et la charge des batteries s'effectuent à des phases différentes aussi il a été proposé, dans les demandes EP 0 603 778 et WO97/08009, de réutiliser une partie du moteur et des composants servant à son alimentation pour réaliser le dispositif de charge des batteries.

A cet effet, le dispositif de charge des batteries utilise l'onduleur pour former un convertisseur alternatif continu ainsi que les bobinages du moteur pour former les inductances. Le passage du mode d'alimentation du moteur à celui de la charge des batteries est assuré par des moyens de commutation avec des contacteurs de puissance en déconnectant le neutre.

L'utilisation des connecteurs de puissance est toutefois problématique dans le sens où, assurant le passage des courants de la machine électrique, ils doivent être surdimensionnés. Pour pallier à cet inconvénient une solution consiste à réaliser une structure présentant des moyens de commutation intégrés avec des ponts en H.

Toutefois dans les deux cas précités l'utilisation des phases du moteur comme inductance pour redresser le courant du réseau électrique cause des perturbations au niveau du rotor du moteur. En effet, les inductances sont magnétisées par les courants alternatifs créant ainsi des champs magnétiques. Ces champs magnétiques agissent sur le rotor qui peut entrer en mouvement, par exemple en vibrant, et même, en fonction des champs magnétiques et des caractéristiques du rotor, entrer en rotation. Cette mise en mouvement pose des problèmes à la fois de confort et de sécurité dans le cas d'une utilisation du dispositif électrique combiné dans un véhicule électrique même si ce dernier peut être équipé d'un système de découplage du train de la machine lors de la charge.

Le document EP0603778 décrit un procédé selon le préambule de la revendication 1 et un dispositif selon le préambule de la revendication 14.

### OBJET DE L'INVENTION

La présente invention a pour but de proposer un dispositif et un procédé permettant l'alimentation du moteur et la charge de la batterie en utilisant des éléments du moteur et de l'onduleur et tel que le dispositif et le procédé permettent de pallier les inconvénients précités lors de la charge des moyens d'accumulation.

### RESUME DE L'INVENTION

A cet effet, l'invention vise un procédé combiné d'alimentation et de charge comporte une étape de commande permettant de passer d'un mode d'alimentation d'un moteur à un mode de charge des moyens d'accumulation sur un réseau électrique et inversement. Il comporte en outre une étape de compensation des champs magnétiques lors de l'étape de charge des moyens d'accumulation permettant de limiter ou supprimer les mouvements du rotor.

Ce procédé est mis en oeuvre dans un dispositif équipé d'un moteur et relié à un réseau électrique dont le nombre de phases est inférieur au nombre de phases du moteur, l'étape de compensation pouvant alors comporter une opération consistant à injecter, dans la ou les phases du moteur qui ne sont pas reliées à une phase du réseau, un courant de compensation. Ce courant de compensation peut être asservi à la position du rotor du moteur et/ou au courant de charge injecté dans les phases du moteur qui sont reliées à une phase du réseau électrique.

Alternativement ou en complément, l'étape de compensation peut comporter une opération consistant à redresser par un pont de diodes le réseau électrique, de même qu'une opération consistant à injecter le courant de charge par le point milieu d'au moins un enroulement inductif du stator du moteur. Dans ce cas, durant ladite opération d'injection de courant, le même courant peut être injecté dans chacune des moitiés dudit enroulement inductif, ce qui permet d'abaisser l'inductance de l'enroulement correspondant, en ne laissant apparent que son inductance de fuite.

Le procédé peut être mis en oeuvre dans un dispositif équipé d'un moteur triphasé et relié à un réseau électrique monophasé, l'étape de compensation comportant une opération consistant à redresser par un pont de diode le réseau électrique ainsi qu'une opération consistant à injecter, dans la ou les phases du moteur qui ne sont pas reliées à une phase du réseau, un courant égal au courant de charge injecté dans la ou les phases du moteur qui sont reliées à une phase du réseau.

Le procédé peut également être mis en oeuvre dans un dispositif équipé d'un moteur triphasé et relié à un réseau électrique monophasé, l'étape de compensation comportant une opération consistant à injecter, dans la ou les phases du moteur qui ne sont pas reliées à une phase du réseau, un courant égal au courant de charge injecté dans la ou les phases du moteur qui sont reliées à une phase du réseau.

Le procédé peut également être mis en oeuvre dans un dispositif équipé d'un moteur triphasé et relié à un réseau électrique monophasé, l'étape de compensation comportant une opération consistant à redresser par un pont de diode le réseau électrique ainsi qu'une opération consistant à injecter le courant de charge par le point milieu d'au moins une bobine du stator du moteur.

Le procédé peut également être mis en oeuvre dans un dispositif équipé d'un moteur triphasé, et relié à un réseau électrique monophasé, l'étape de compensation comportant une opération consistant à injecter le courant de charge par le point milieu d'au moins une bobine du stator du moteur.

Le procédé peut également être mis en oeuvre dans un dispositif équipé d'un moteur triphasé et relié à un réseau électrique triphasé, l'étape de compensation comporte une opération consistant à redresser par un pont de diode le réseau électrique et à inverser une phase du moteur.

Le procédé peut également être mis en oeuvre dans un dispositif équipé d'un moteur triphasé et relié à un réseau électrique triphasé dans lequel l'étape de compensation comporte une opération consistant à injecter le courant de charge par les points milieux des bobines du stator du moteur.

Un autre aspect de l'invention vise un dispositif selon la revendication 14.

### BREVE DESCRIPTION DES DESSINS

La présente invention sera mieux comprise à la lecture d'un exemple détaillé de réalisation en référence aux dessins annexés, fournis à titre d'exemple non limitatif, parmi lesquels :
- la figure 1 représente de manière schématique un exemple de réalisation d'un onduleur triphasé avec un réseau électrique monophasé, la compensation étant effectuée par un pont de diode;
- les figures 2A et 2B représentent de manière schématique deux exemples de réalisation d'un onduleur triphasé avec un réseau électrique monophasé, la compensation étant effectuée par injection de courant;
- la figure 3 représente de manière schématique un exemple de réalisation d'un onduleur triphasé avec un réseau électrique monophasé, la compensation étant effectuée par injection du courant de charge par les points milieux des bobines;
- la figure 4 représente de manière schématique un exemple de réalisation d'un onduleur triphasé avec un réseau électrique triphasé, la compensation étant effectuée par des ponts de diodes;
- la figure 5 représente de manière schématique un exemple de réalisation d'un onduleur triphasé avec un réseau électrique triphasé, la compensation étant effectuée par injection du courant de charge par les points milieux des bobines;
- la figure 6 représente de manière schématique un exemple de réalisation du branchement de l'ensemble moteur, onduleur, moyens d'accumulation et prise de réseau.

### DESCRIPTION DETAILLEE DE L'INVENTION

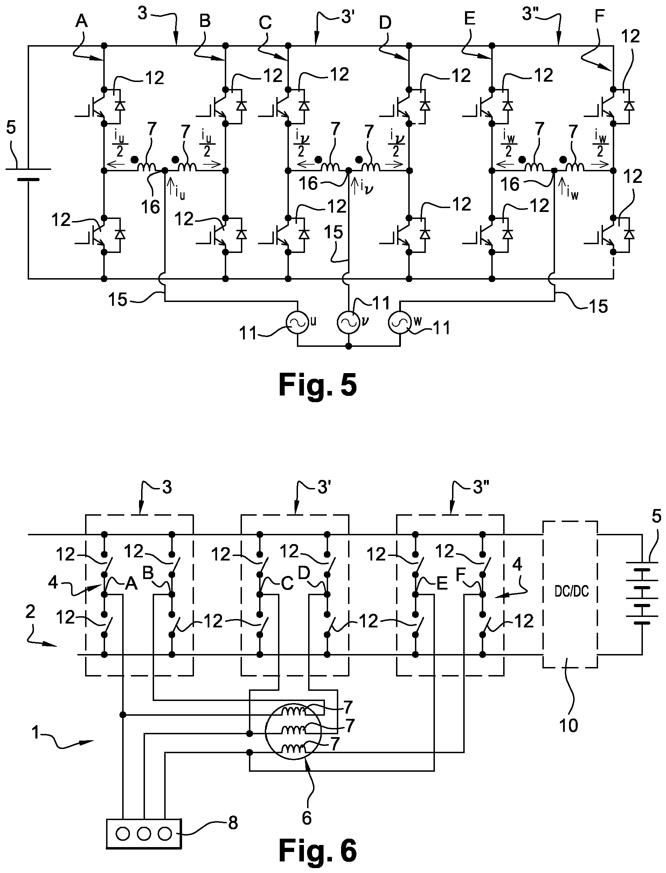

En se reportant principalement à la figure 6 on voit représenté un dispositif 1 selon l'invention avec un onduleur 2 et des moyens de commutation 4 comportant trois ponts en H, 3, 3', 3". Chaque pont 3, 3', 3" comporte quatre interrupteurs 12 (constitués, dans le présent exemple, par des transistors de puissance) répartis sur des bras référencés de A à F. Le dispositif 1 comprend en outre des moyens d'accumulation 5, un moteur 6, représenté partiellement, dont les enroulements 7 font office d'inductance.

Le dispositif 1 comporte également une connectique 8 permettant le raccordement à la prise du réseau électrique 11.

Le passage du mode d'alimentation au mode de charge est géré par un circuit de commande 9 (dans la figure 6, la liaison entre le circuit de commande 9 et les interrupteurs 12 n'a pas été représentée pour faciliter la lecture de la figure). En se reportant à la figure 6, on voit que le dispositif 1 comporte également un convertisseur DC/DC 10 disposé entre les ponts en H et les moyens d'accumulation 5, ce dernier permet d'adapter les tensions et par conséquent d'optimiser le dimensionnement de l'onduleur sans dégrader le rendement.

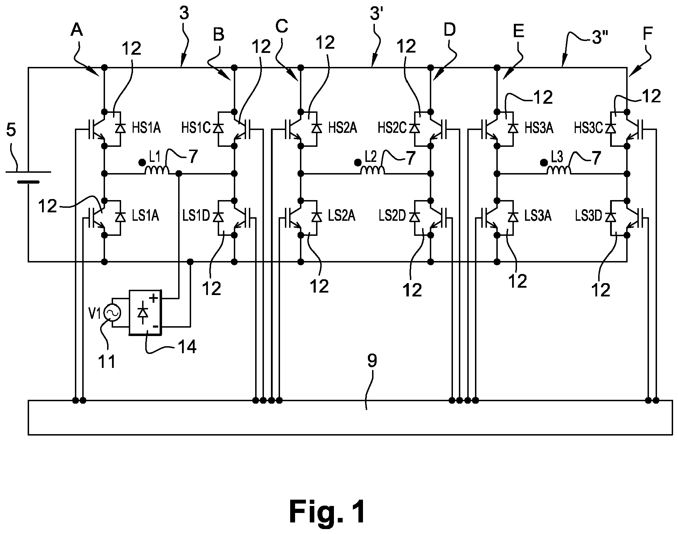

La figure 1 vise un mode de réalisation associant un moteur triphasé et un réseau électrique de charge monophasé, la compensation s'effectuant par redressement du réseau. La figure 1 représente un onduleur 2 avec un circuit de commande 9 et une source ou réseau électrique 11 monophasé. L'unique phase du réseau 11 est branchée sur la première phase du moteur 6 pour permettre la charge des moyens d'accumulation 5. Plus précisément, la phase du réseau 11 est branchée de sorte à employer la première bobine 7 du stator du moteur 6 comme inductance lors de la charge.

Lors de cette étape de charge se crée dans le moteur un champ magnétique comportant une composante homopolaire qui attire et repousse successivement les pôles du rotor du moteur 6. En fonction des types de rotor, il est ainsi possible que le rotor vibre ou entre en rotation lors de la charge des moyens d'accumulation 5 et notamment en cas d'utilisation d'un rotor à aimants permanents. Même dans le cas d'un rotor bobiné, si ce dernier n'est pas isolé de son alimentation, des courants induits parasites peuvent apparaître au niveau du rotor et mettre celui-ci en mouvement. L'utilisation d'un pont à diode 14 comme moyens de compensation permet de créer un champ unipolaire ne variant qu'en amplitude. Ces moyens de compensation empêchent l'apparition des phénomènes d'attraction répulsion dans un rotor à aimants permanents.

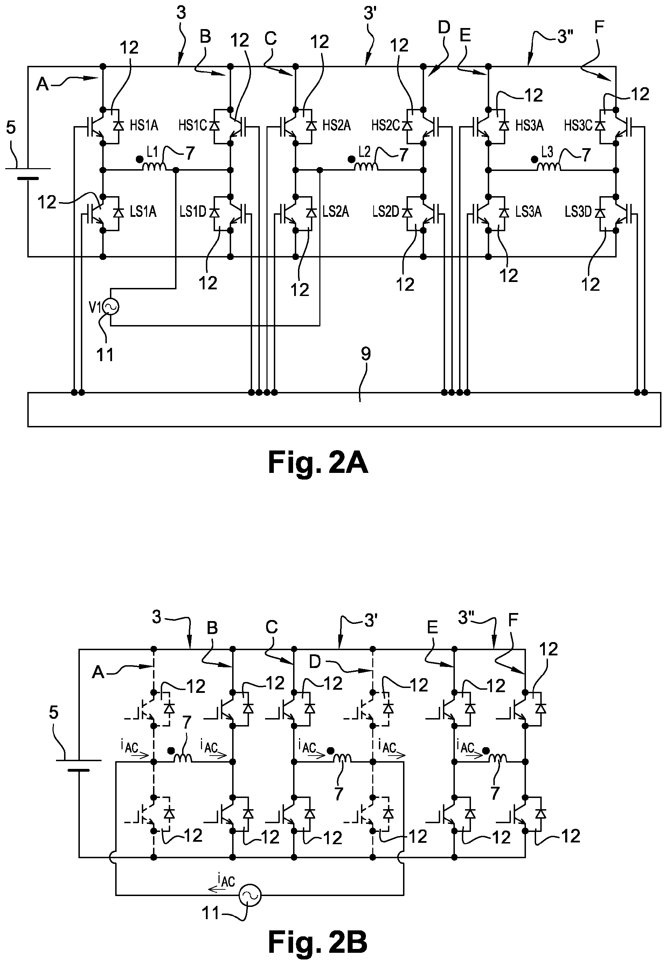

Les figures 2A et 2B visent un mode de réalisation associant un moteur triphasé et un réseau électrique de charge monophasé, la compensation s'effectuant par injection de courant. La figure 2A représente un onduleur 2 avec un circuit de commande 9 et réseau électrique 11 monophasé. Dans cet exemple, la compensation consiste à injecter dans la phase restante un courant identique à celui utilisé pour la charge. La compensation permet par conséquent d'inhiber ainsi l'effet du courant de charge vis-à-vis du rotor.

La compensation des champs magnétiques lors de l'étape de charge est ici réalisée par une opération de compensation au cours de laquelle le circuit de commande 9 pilote les interrupteurs 12 de sorte à injecter, dans chacune des deux phases du moteur qui sont restées libres (c'est-à-dire dans les deux bobines du stator du moteur 6 qui ne sont pas reliées au réseau 11), un courant de compensation déterminé par le circuit de commande 9 de telle sorte que la somme vectorielle des champs magnétiques créées par chacune des trois bobines 7 soit nulle. Ceci permet de réduire ou supprimer les mouvements du rotor dus par exemple aux dissymétries du moteur.

A titre d'exemple, des courants de compensation identiques à celui de la charge peuvent être injectés inhibant ainsi l'effet du courant de charge vis-à-vis du rotor. Le circuit de commande 9 détermine ainsi le courant de compensation en l'asservissant sur le courant de charge.

En variante ou en complément, les courants de compensation peuvent aussi être déterminés par le circuit de commande 9 en fonction de la position du rotor du moteur 6 fournie par exemple par un capteur. Le courant de compensation est alors asservi à la position physique du rotor, c'est-à-dire qu'il est modifié jusqu'à ce que le rotor s'immobilise ou présente un mouvement acceptable.

La figure 2B montre une variante dans le branchement du réseau monophasé sur les ponts en H (3, 3', 3"). La liaison du circuit de commande 9 aux transistors des ponts en H n'a pas été représentée pour alléger la figure. Ces liaisons sont identiques à celles des figures 1 et 2A.

Dans toutes les figures, les points visibles à proximité des enroulements moteur 7 définissent le sens d'enroulement du bobinage dans les encoches prévues à cet effet. Le bobinage est tel que si des courants triphasés équilibrés alimentent les bobines 7 du moteur 6 par chacune des bornes indiquées par le point, le système de force magnétomotrice est un système triphasé équilibré. Par abus de langage, on dira que la borne d'une bobine 7 marquée par un point est la borne positive.

Dans la figure 2B, le réseau monophasé est branché de telle sorte que le neutre du réseau est sur une borne de bobine 7 dite positive et la phase est une sur une borne négative. Ainsi, du point de vue du moteur 6, les courants traversant ses deux premières bobines sont en phase. Il suffit alors d'injecter dans la bobine 7 restante un courant en phase. Ainsi les champs générés au stator du moteur 6 sont sans effet sur le rotor car la somme vectorielle des courants des bobines 7 du moteur en tenant compte de leur décalage spatial est nulle.

Lors de la charge, une des commandes possibles est de piloter les bras B et C en opposition de phase. Par exemple, les bras B et C peuvent être commandés selon une commande PWM (Pulse Width Modulation, en français : modulation à largeur d'impulsions) classique afin de réaliser la fonction PFC (Power Factor Corrector, en français : correcteur de facteur de puissance). On ne détaillera pas plus ici comment contrôler le courant pour réaliser toutes les fonctionnalités d'un chargeur de batterie, ce qui est connu de l'homme du métier. Pour réaliser la compensation, les bras E et F sont pilotés dans le présent exemple de manière à générer un courant égal en amplitude et en phase sur la bobine 7 correspondante dont le rôle est de compenser le champ statorique créé par les deux premières bobines 7. Les bras A et D sont représentés en pointillés car ils ne sont pas commandés lors de cette phase de charge. La compensation est ainsi réalisée par les bras E et F.

Une variante du mode de réalisation de la figure 1 consiste à ajouter à la compensation par redressement du réseau une compensation par injection de courant dans la phase restée libre du moteur, à l'instar du mode de réalisation des figures 2A et 2B.

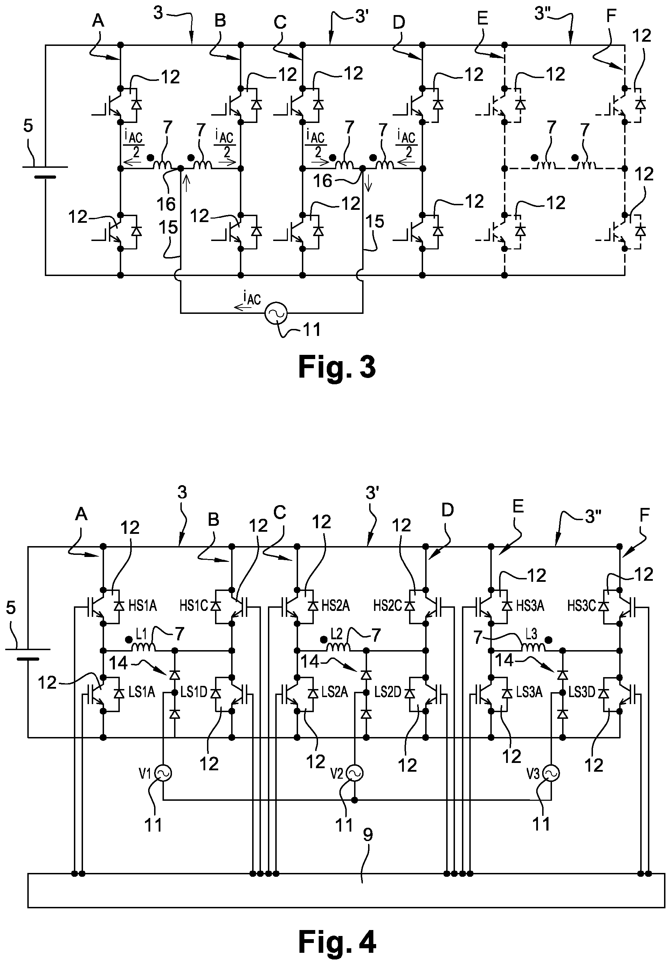

La figure 3 vise un mode de réalisation associant un moteur triphasé et un réseau électrique de charge monophasé, la compensation s'effectuant par injection de courant aux points milieux des enroulements 7 du moteur 6. La figure 3 représente un onduleur 2 avec un circuit de commande 9 et un réseau électrique 11 monophasé. Dans cet exemple les moyens de compensation sont réalisés en connectant les bornes 15 du réseau électrique 11 par les points milieux 16 de deux bobines du stator du moteur 6. Lors de l'étape de charge l'entrée du courant s'effectue au niveau des points milieux 16. Cette introduction fait que les courants de charge sont équilibrés entre chaque demi-bobine et par conséquent ne créent pas de force magnétomotrice.

Les bras A et B ainsi que C et D sont pilotés dans le présent exemple de manière à générer des courants égaux en amplitude mais en opposition de phase du point de vue du moteur 6. Par exemple, les bras B et C peuvent être commandés selon une commande PWM classique afin de réaliser la fonction PFC. Les courants de chaque demi bobine circulant dans les mêmes encoches mais dans des sens opposés, comme indiqué sur la figure, la force magnétomotrice est donc nulle. Il n'y a pas de champ crée au niveau du stator grâce à cette compensation. Néanmoins ces courants sont en phase du point de vue du chargeur de batterie.

La charge de batterie est assurée comme dans un chargeur conventionnel par les bras A,B,C,et D et par les inductances de fuite de chaque paire de demi-bobine. En effet, le couplage des deux demi-bobines n'est pas parfait bien que traversant les mêmes encoches, ceci étant dû aux inévitables imperfections de forme des bobines. Ces imperfections forment donc un élément inductif pour la fonction chargeur. Les bras E et F ne sont pas commandés durant cette phase de charge.

En variante, les bobines peuvent être agencées pour que les courants de chaque demi-bobine ne circulent pas dans les mêmes encoches.

La figure 4 vise un mode de réalisation associant un moteur triphasé et un réseau électrique de charge triphasé, la compensation s'effectuant par redressement du réseau. La figure 4 représente un onduleur 2 avec un circuit de commande 9 et réseau électrique 11 triphasé. Dans cet exemple de réalisation les moyens de compensation comportent des ponts de diode 14. Pour améliorer la compensation et empêcher toute rotation du rotor, la compensation peut comporter une étape supplémentaire consistant à inverser une phase du rotor du moteur 6. Cette inversion peut être réalisée simplement en inversant le branchement de l'un des enroulements inductifs du stator (voir figure 4 où, pour l'enroulement 7 le plus à gauche sur la figure, le point est à droite de cet enroulement tandis que, pour les deux autres enroulements 7, le point est à gauche de l'enroulement correspondant).

La figure 5 vise un mode de réalisation associant un moteur triphasé et un réseau électrique de charge triphasé, la compensation s'effectuant par injection de courant aux points milieux des enroulements 7 du moteur 6. La figure 5 représente un onduleur 2 avec un circuit de commande 9 et réseau électrique 11 triphasé. Dans cet exemple de réalisation les moyens de compensation sont réalisés en connectant le réseau électrique 11 aux points milieux 16 des bobines du stator du moteur 6. Tous les bras A à F sont ici commandés selon une commande PWM classique afin de réaliser la fonction PFC.

L'entrée du courant, lors du mode de charge des moyens d'accumulations, au niveau des points milieux fait, à l'instar de ce qui a été décrit dans l'exemple de la figure 3 pour un réseau électrique monophasé, que les courants de charge sont équilibrés entre chaque demi-bobine et par conséquent ne créent pas de force magnétomotrice.

Cette solution de la compensation par injection de courant dans les points milieux des bobines a pour avantage de réduire avantageusement l'inductance apparente du chargeur (ceci est valable également pour le mode de réalisation de la figure 3). En effet, afin de réaliser un dispositif réalisant la fonction PFC, l'inductance des bobines ne doit pas être trop importante pour ne pas déformer l'onde du courant. Lorsque le facteur de puissance est unitaire, le courant est en phase de la tension. La pente du courant est maximale lorsque la tension est nulle. Si l'inductance est importante, la montée du courant sera plus longue et atteindra sa pente maximale avec retard. La conséquence est une distorsion du courant lors du passage à zéro. Cette distorsion est une source d'harmonique. Or, l'inductance de fuite est largement inférieure à l'inductance magnétisante. Généralement, le rapport de l'inductance de fuite sur l'inductance magnétisante est de 1 à 10%. Dans le cas d'une machine haute tension, la valeur de l'inductance croît avec le carré de la tension de commande. Pour des systèmes haute tension, les inductances des bobines de stator des machines électriques sont trop élevées pour réaliser un chargeur avec contrôle du facteur de puissance. La solution des figures 3 et 5 permet de diviser par 10 voir 100 cette inductance. Par exemple, une machine de 50KW dimensionnée pour un onduleur à pont en H de 900V peut présenter une inductance de 4mH. Cette valeur n'est pas adaptée pour un chargeur de 3KW sous 230V. L'utilisation de l'inductance de fuite permet de réduire cette valeur entre 400 et 40µH. L'inconvénient peut être une ondulation du courant plus importante à la fréquence de découpage. Cette ondulation peut être réduite en augmentant la fréquence de découpage. Sachant que le chargeur de 3 à 6KW n'utilise pas la pleine capacité de l'électronique dimensionnée pour un onduleur de 50KW, il n'y pas d'inconvénient à augmenter les pertes par commutation en mode de charge batterie.

Par conséquent, dans le cas d'une injection de courant aux points milieux d'une ou de plusieurs bobines du stator (figures 3 et 5), et lorsque le même courant est injecté dans les deux demi-bobines (formées par l'existence du point milieu), les inductances des deux demi-bobines s'annulent. Seule reste apparente l'inductance de fuite liée aux imperfections des bobines, cette inductance étant bien plus faible et mieux adaptées à l'utilisation dans un chargeur.

D'autres caractéristiques de l'invention auraient également pu être envisagées sans pour autant sortir du cadre de l'invention définie par les revendications ci-après. Ainsi, dans les différents exemples repris dans la description les moyens de compensation sont détaillés avec un moteur triphasé, toutefois les enseignements de cette description pourront être transposés et étendus de manière générale à des machines électriques polyphasées.

De même dans les exemples cités l'onduleur a une structure de pont en H, l'invention ne se limite toutefois pas à cette structure et notamment pourra être étendue à une structure classique avec un onduleur réalisé avec des ponts triphasés et des moyens de commutation de type contacteur de puissance pour passer d'un mode de charge des batteries à un mode d'alimentation du moteur. Par ailleurs, les différents modes de réalisation ici décrits peuvent être combinés, de même que l'étape de compensation peut être réalisée par une combinaison des différents moyens de compensation décrits.

Dans les exemples cités, l'expression « point milieu », lorsqu'elle se rapporte à une bobine, peut désigner non seulement le point de connexion de deux demi-bobines de même nombre de spires, mais aussi le point de connexion de deux demi-bobines de nombre de spires différentes. L'expression « point milieu » est donc ici employée conformément à sons sens courant en électronique en couvrant aussi bien un point pris à l'exact milieu d'une bobine, qu'un point divisant la bobine en deux portions inégales (par exemple, une portion comportant les deux tiers du nombre total de spires et une autre portion comportant un tiers du nombre total de spires). Dans le même esprit, les termes « moitié » ou « demi-bobine » désignent une de ces portions, même si cette dernière comporte un nombre de spires différent de la moitié du nombre total de spires de la bobine. Les courants de charge sont alors répartis dans chaque demi-bobine à l'image du rapport entre le nombre de spire de la demi-bobine considérée et le nombre total de spires de la bobine.

## Revendications

1. Procédé combiné d'alimentation et de charge, pour la mise en oeuvre d'un dispositif équipé d'un moteur (6) dans un véhicule électrique, ledit dispositif étant relié à un réseau électrique (11), ledit procédé comportant une étape de commande permettant de passer d'un mode d'alimentation de bobinages du moteur (6) par des moyens d'accumulation (5), via un onduleur (2), à un mode de charge des moyens d'accumulation (5) sur le réseau électrique (11) via l'onduleur (2) et les bobinages du moteur (6) qui forment respectivement, selon ce mode, un convertisseur alternatif/continu et des inductances, le procédé permettant inversement le passage du mode de charge au mode d'alimentation,
**caractérisé en ce qu'**il comporte une étape de compensation des champs magnétiques lors de l'étape de charge des moyens d'accumulation, permettant de limiter ou supprimer les mouvements du rotor du moteur (6).

2. Procédé combiné d'alimentation et de charge selon la revendication 1, le nombre de phases du réseau électrique (11) étant inférieur au nombre de phases du moteur (6), dans lequel l'étape de compensation comporte une opération consistant à injecter, dans la ou les phases du moteur (6) qui ne sont pas reliées à une phase du réseau, un courant de compensation.

3. Procédé selon la revendication 2, dans lequel le courant de compensation est asservi à la position du rotor du moteur (6).

4. Procédé selon l'une des revendications 2 ou 3, dans lequel le courant de compensation est asservi au courant de charge injecté dans les phases du moteur (6) qui sont reliées à une phase du réseau électrique (11).

5. Procédé selon l'une des revendications 1 à 4, dans lequel l'étape de compensation comporte une opération consistant à redresser par un pont de diodes (14) le réseau électrique (11).

6. Procédé selon l'une des revendications 1 à 5, dans lequel l'étape de compensation comporte une opération consistant à injecter le courant de charge par le point milieu d'au moins un enroulement inductif (7) du stator du moteur (6).

7. Procédé selon la revendication 6, dans lequel, durant ladite opération d'injection de courant, le même courant est injecté dans chacune des moitiés dudit enroulement inductif (7).

8. Procédé combiné d'alimentation et de charge selon la revendication 1, pour la mise en oeuvre d'un dispositif équipé d'un moteur triphasé (6) et relié à un réseau électrique monophasé (11), dans lequel l'étape de compensation comporte une opération consistant à redresser par un pont de diode (14) le réseau électrique (11) ainsi qu'une opération consistant à injecter, dans la ou les phases du moteur (6) qui ne sont pas reliées à une phase du réseau (11), un courant égal au courant de charge injecté dans la ou les phases du moteur (6) qui sont reliées à une phase du réseau (11) .

9. Procédé combiné d'alimentation et de charge selon la revendication 1, pour la mise en oeuvre d'un dispositif équipé d'un moteur triphasé (6) et relié à un réseau électrique monophasé (11), dans lequel l'étape de compensation comporte une opération consistant à injecter, dans la ou les phases du moteur (6) qui ne sont pas reliées à une phase du réseau (11), un courant égal au courant de charge injecté dans la ou les phases du moteur (6) qui sont reliées à une phase du réseau (11) .

10. Procédé combiné d'alimentation et de charge selon la revendication 1 pour la mise en oeuvre d'un dispositif équipé d'un moteur triphasé (6) et relié à un réseau électrique monophasé (11) dans lequel l'étape de compensation comporte une opération consistant à redresser par un pont de diode (14) le réseau électrique (11) ainsi qu'une opération consistant à injecter le courant de charge par le point milieu (16) d'au moins une bobine du stator du moteur (6).

11. Procédé combiné d'alimentation et de charge selon la revendication 1 pour la mise en oeuvre d'un dispositif équipé d'un moteur triphasé (6), et relié à un réseau électrique monophasé (11) dans lequel l'étape de compensation comporte une opération consistant à injecter le courant de charge par le point milieu (16) d'au moins une bobine du stator du moteur (6).

12. Procédé combiné d'alimentation et de charge selon la revendication 1 pour la mise en oeuvre d'un dispositif équipé d'un moteur triphasé (6) et relié à un réseau électrique triphasé (11) dans lequel l'étape de compensation comporte une opération consistant à redresser par un pont de diode (14) le réseau électrique (11) et à inverser une phase du moteur.

13. Procédé combiné d'alimentation et de charge selon la revendication 1 pour la mise en oeuvre d'un dispositif équipé d'un moteur triphasé (6) et relié à un réseau électrique triphasé (11) dans lequel l'étape de compensation comporte une opération consistant à injecter le courant de charge par les points milieux (16) des bobines du stator du moteur (6).

14. Dispositif électrique combiné d'alimentation et de charge destiné à être relié à un réseau électrique (11), comportant un moteur (6) à courant alternatif pour un véhicule électrique, un onduleur (2), des moyens d'accumulation (5) et des moyens de commutation (4) permettant soit d'autoriser l'alimentation des bobinages du moteur (6) par les moyens d'accumulation (5) via l'onduleur (2), soit d'autoriser la charge des moyens d'accumulation (5) sur le réseau électrique (11) via l'onduleur (2) et les bobinages du moteur (6) qui forment alors respectivement un convertisseur alternatif/continu et des inductances,
ledit dispositif électrique étant **caractérisé en ce qu'**il comprend des moyens de compensation des champs magnétiques engendrés lors de la charge des moyens d'accumulation (5) permettant de limiter ou supprimer les mouvements du rotor du moteur (6).

## Patentansprüche

1. Kombiniertes Verfahren für Versorgung und Aufladung für die Anwendung einer Vorrichtung, ausgestattet mit einem Motor (6) in einem Elektrofahrzeug, wobei die Vorrichtung mit einem Stromnetz (11) verbunden ist, wobei das Verfahren einen Steuerschritt aufweist, der erlaubt, aus einem Versorgungsmodus von Spulen des Motors (6) durch Akkumulationsmittel (5) über einen Wechselrichter (2) in einen Aufladungsmodus der Akkumulationsmittel (5) über das Stromnetz (11) über den Wechselrichter (2) und die Spulen des Motors (6) zu wechseln, die jeweils, gemäß diesem Modus, einen Wechsel-Gleichstrom-Konverter und Drosselspulen bilden, wobei das Verfahren umgekehrt den Wechsel aus dem Aufladungsmodus in den Versorgungsmodus erlaubt,
**dadurch gekennzeichnet, dass** es bei dem Aufladungsschritt der Akkumulationsmittel einen Ausgleichsschritt der Magnetfelder aufweist, der erlaubt, die Bewegungen des Rotors des Motors (6) zu begrenzen oder zu vermeiden.

2. Kombiniertes Verfahren für Versorgung und Aufladung nach Anspruch 1, wobei die Phasenanzahl des Stromnetzes (11) kleiner als die Phasenanzahl des Motors (6) ist, wobei der Ausgleichsschritt einen Vorgang aufweist, der darin besteht, in die Phase(n) des Motors (6), die nicht mit einer Phase des Netzes verbunden ist/sind, einen Ausgleichsstrom einzuspeisen.

3. Verfahren nach Anspruch 2, wobei der Ausgleichsstrom nach der Position des Rotors des Motors (6) gesteuert wird.

4. Verfahren nach einem der Ansprüche 2 oder 3, wobei der Ausgleichsstrom nach dem Aufladungsstrom gesteuert wird, der in die Phasen des Motors (6) eingespeist wird, die mit einer Phase des Stromnetzes (11) verbunden sind.

5. Verfahren nach einem der Ansprüche 1 bis 4, wobei der Ausgleichsschritt einen Vorgang aufweist, der darin besteht, das Stromnetz (11) durch eine Diodenbrücke (14) gleichzurichten.

6. Verfahren nach einem der Ansprüche 1 bis 5, wobei der Ausgleichsschritt einen Vorgang aufweist, der darin besteht, den Aufladungsstrom durch den Mittelpunkt mindestens einer induktiven Wicklung (7) des Stators des Motors (6) einzuspeisen.

7. Verfahren nach Anspruch 6, wobei während des Stromeinspeisevorgangs derselbe Strom in jede der Hälften der induktiven Wicklung (7) eingespeist wird.

8. Kombiniertes Verfahren für Versorgung und Aufladung nach Anspruch 1 für die Anwendung einer Vorrichtung, die mit einem dreiphasigen Motor (6) ausgestattet und mit einem einphasigen Stromnetz (11) verbunden ist, wobei der Ausgleichsschritt einen Vorgang aufweist, der darin besteht, das Stromnetz (11) durch eine Diodenbrücke (14) gleichzurichten, sowie einen Vorgang, der darin besteht, in die Phase(n) des Motors (6), die nicht mit einer Phase des Netzes (11) verbunden ist/sind, einen Strom einzuspeisen, der gleich dem Aufladungsstrom ist, der in die Phase(n) des Motors (6) eingespeist wird, die mit einer Phase des Netzes (11) verbunden ist/sind.

9. Kombiniertes Verfahren für Versorgung und Aufladung nach Anspruch 1 für die Anwendung einer Vorrichtung, die mit einem dreiphasigen Motor (6) ausgestattet und mit einem einphasigen Stromnetz (11) verbunden ist, wobei der Ausgleichsschritt einen Vorgang aufweist, der darin besteht, in die Phase(n) des Motors (6), die nicht mit einer Phase des Netzes (11) verbunden ist/sind, einen Strom einzuspeisen, der gleich dem Aufladungsstrom ist, der in die Phase(n) des Motors (6) eingespeist wird, die mit einer Phase des Netzes (11) verbunden ist/sind.

10. Kombiniertes Verfahren für Versorgung und Aufladung nach Anspruch 1 für die Anwendung einer Vorrichtung, die mit einem dreiphasigen Motor (6) ausgestattet und mit einem einphasigen Stromnetz (11) verbunden ist, wobei der Ausgleichsschritt einen Vorgang aufweist, der darin besteht, das Stromnetz (11) durch eine Diodenbrücke (14) gleichzurichten, sowie einen Vorgang, der darin besteht, den Aufladungsstrom durch den Mittelpunkt (16) mindestens einer Spule des Stators des Motors (6) einzuspeisen.

11. Kombiniertes Verfahren für Versorgung und Aufladung nach Anspruch 1 für die Anwendung einer Vorrichtung, die mit einem dreiphasigen Motor (6) ausgestattet und mit einem einphasigen Stromnetz (11) verbunden ist, wobei der Ausgleichsschritt einen Vorgang aufweist, der darin besteht, den Aufladungsstrom durch den Mittelpunkt (16) mindestens einer Spule des Stators des Motors (6) einzuspeisen.

12. Kombiniertes Verfahren für Versorgung und Aufladung nach Anspruch 1 für die Anwendung einer Vorrichtung, die mit einem dreiphasigen Motor (6) ausgestattet und mit einem dreiphasigen Stromnetz (11) verbunden ist, wobei der Ausgleichsschritt einen Vorgang aufweist, der darin besteht, das Stromnetz (11) durch eine Diodenbrücke (14) gleichzurichten und eine Phase des Motors umzukehren.

13. Kombiniertes Verfahren für Versorgung und Aufladung nach Anspruch 1 für die Anwendung einer Vorrichtung, die mit einem dreiphasigen Motor (6) ausgestattet und mit einem dreiphasigen Stromnetz (11) verbunden ist, wobei der Ausgleichsschritt einen Vorgang aufweist, der darin besteht, den Aufladungsstrom durch die Mittelpunkte (16) der Spulen des Stators des Motors (6) einzuspeisen.

14. Kombinierte elektrische Vorrichtung für die Versorgung und Aufladung, die bestimmt ist, mit einem Stromnetz (11) verbunden zu sein, aufweisend einen Wechselstrommotor (6) für ein Elektrofahrzeug, einen Wechselrichter (2), Akkumulationsmittel (5) und Umschaltmittel (4), die entweder die Versorgung der Spulen des Motors (6) durch die Akkumulationsmittel (5) über den Wechselrichter (2) oder das Aufladen der Akkumulationsmittel (5) über das Stromnetz (11) über den Wechselrichter (2) und die Spulen des Motors (6) zu erlauben, die dann jeweils einen Wechsel-Gleichstrom-Konverter und Drosselspulen bilden,
wobei die elektrische Vorrichtung **dadurch gekennzeichnet ist, dass** sie Ausgleichsmittel der Magnetfelder umfasst, die beim Aufladen der Akkumulationsmittel (5) erzeugt werden, die erlauben, die Bewegungen des Rotors des Motors (6) zu begrenzen oder zu vermeiden.

## Claims

1. Combined method for powering and charging, for the implementing of a device provided with a motor (6) in an electrical vehicle, said device being connected to an electrical network (11), said method comprising a control step making it possible to switch from a powering mode of the windings of the motor (6) by storage means (5), via a inverter (2), to a charging mode of the storage means (5) on the electrical network (11) via the inverter (2) and the windings of the motor (6) which form respectively, according to this mode, an AC/DC converter and inductances, the method inversely allowing for the switching of the charging mode to the powering mode,
**characterised in that** it comprises a step of compensation of the magnetic fields during the step of charging of the storage means, making it possible to limit or suppress the movements of the rotor of the motor (6).

2. Combined method for powering and charging according to claim 1, the number of phases of the electrical network (11) being less than the number of phases of the motor (6), wherein the step of compensation comprises an operation consisting in injecting, into the phase or phases of the motor (6) which are not connected to a phase of the network, a compensation current.

3. Method according to claim 2, wherein the compensation current is subjected to the position of the rotor of the motor (6).

4. Method according to one of claims 2 or 3, wherein the compensation current is subjected to the charge current injected into the phases of the motor (6) which are connected to a phase of the electrical network (11).

5. Method according to one of claims 1 to 4, wherein the step of compensation comprises an operation consisting in rectifying by a diode bridge (14) the electrical network (11).

6. Method according to one of claims 1 to 5, wherein the step of compensation comprises an operation consisting in injecting the charge current by the middle point of at least one inductive winding (7) of the stator of the motor (6).

7. Method according to claim 6, wherein, during said operation of injecting current, the same current is injected into each one of the halves of said inductive winding (7).

8. Combined method for powering and charging according to claim 1, for the implementing of a device provided with a three-phase motor (6) and connected to a single-phase electrical network (11), wherein the step of compensation comprises an operation consisting in rectifying by a diode bridge (14) the electrical network (11) as well as an operation consisting in injecting, into the phase or phases of the motor (6) which are not connected to a phase of the network (11), a current equal to the charge current injected into the phase or phases of the motor (6) which are connected to a phase of the network (11).

9. Combined method for powering and charging according to claim 1, for the implementing of a device provided with a three-phase motor (6) and connected to a single-phase electrical network (11), wherein the step of compensation comprises an operation consisting in injecting, into the phase or phases of the motor (6) which are not connected to a phase of the network (11), a current equal to the charge current injected into the phase or phases of the motor (6) which are connected to a phase of the network (11).

10. Combined method for powering and charging according to claim 1 for the implementing of a device provided with a three-phase motor (6) and connected to a single-phase electrical network (11) wherein the step of compensation comprises an operation consisting in rectifying by a diode bridge (14) the electrical network (11) as well as an operation consisting in injecting the charge current by the middle point (16) of at least one coil of the stator of the motor (6).

11. Combined method for powering and charging according to claim 1 for the implementing of a device provided with a three-phase motor (6), and connected to a single-phase electrical network (11) wherein the step of compensation comprises an operation consisting in injecting the charge current by the middle point (16) of at least one coil of the stator of the motor (6).

12. Combined method for powering and charging according to claim 1 for the implementing of a device provided with a three-phase motor (6) and connected to a three-phase electrical network (11) wherein the step of compensation comprises an operation consisting in rectifying by a diode bridge (14) the electrical network (11) and in inverting a phase of the motor.

13. Combined method for powering and charging according to claim 1 for the implementing of a device provided with a three-phase motor (6) and connected to a three-phase electrical network (11) wherein the step of compensation comprises an operation consisting in injecting the charge current by the middle points (16) of the coils of the stator of the motor (6).

14. Electric combined device for powering and charging intended to be connected to an electrical network (11), comprising an AC motor (6) for an electric vehicle, a inverter (2), storage means (5) and switching means (4) making it possible either to authorise the powering of the windings of the motor (6) by the storage means (5) via the inverter (2), or to authorise the charging of the storage means (5) on the electrical network (11) via the inverter (2) and the windings of the motor (6) which then form respectively an AC/DC converter and inductances, said electric device being **characterised in that** it comprises means for compensating the magnetic fields generated during the charging of the storage means (5) making it possible to limit or suppress the movements of the rotor of the motor (6).
